# EUROPÄISCHE PATENTSCHRIFT

(11) **EP 1 333 198 B1**
(45) Veröffentlichungstag und Bekanntmachung des Hinweises auf die Patenterteilung: **07.07.2004**
(21) Anmeldenummer: 02001835.4
(22) Anmeldetag: 26.01.2002
(51) Int. Cl.: F16H 61/00

(54) **Verfahren zum Steuern eines stufenlosen Kraftfahrzeug-Getriebes**
Control method for a continuously variable vehicle transmission
Méthode de commande d'une transmission à variation continue pour véhicules

(43) Veröffentlichungstag der Anmeldung: 06.08.2003
(73) Patentinhaber: Ford Global Technologies, LLC, Dearborn, MI 48126 (US)
(72) Erfinder: Leenders, Erik, 52353 Düren (DE); Kirchhoffer, Johann, 50737 Köln (DE); Geffers, Peter J., 50829 Köln (DE)
(74) Vertreter: Drömer, Hans-Carsten, Dipl.-Ing.

(56) Entgegenhaltungen:
- EP-A- 0 451 887
- EP-A- 0 828 096
- WO-A-00/76799
- US-A- 5 871 411
- US-A- 6 099 424
- US-A1- 2001 023 216
- US-A1- 2002 004 437
- US-B1- 6 168 546
- DATABASE WPI Section PQ, Week 8310 Derwent Publications Ltd., London, GB; Class Q64, AN 1983-D3269K XP002206070 -& NL 8 103 554 A (VARICAR BV), 16. Februar 1983 (1983-02-16)

## Beschreibung

Die Erfindung betrifft ein Verfahren zum Steuern eines stufenlosen Kraftfahrzeug-Getriebes, das eine mit einer Antriebseinheit eines Kraftfahrzeuges verbindbare Eingangswelle mit einem ersten Kegelscheibenpaar und eine mit einer Abtriebseinheit des Kraftfahrzeuges verbindbare Ausgangswelle mit einem zweiten Kegelscheibenpaar und ein an den Kegelscheiben beider Kegelscheibenpaare im wesentlichen reibschlüssig anliegendes Umschlingungsglied aufweist, wobei der Kegelscheibenanpressdruck mindestens desjenigen Kegelscheibenpaares, das das Umschlingungsglied antreibt, variabel ist.

Bei Getrieben für Kraftfahrzeuge unterscheidet man in Stufen und stufenlos verstellbaren Getrieben. Bei einem Typ der zuletzt genannten Getrieben erstreckt sich ein Umschlingungsglied um zwei Kegelscheibenpaare, wobei das Umschlingungsglied durch Reibschluss kraftschlüssig zwischen den Kegelscheiben der beiden Kegelscheibenpaare angeordnet ist. Die Kegelscheiben der beiden Paare lassen sich synchron und gegenläufig zueinander verschieben, wodurch das Übersetzungsverhältnis des stufenlosen Getriebes verändert werden kann. Das Umschlingungsglied kann entweder als Schub- oder als Zuggliederband ausgebildet sein, im letztgenannten Fall weist das Umschlingungsglied vorzugsweise Kettenglieder auf.

Ein wesentlicher Aspekt stufenloser Kraftfahrzeug-Getriebe, die mit Umschlingungsmitteln die Kraft übertragen, ist die Vermeidung von Schlupf zwischen dem Umschlingungsglied und den Kegelscheibenpaaren. Überschreitet der Schlupf eine bestimmte Grenze, so besteht die Gefahr der Zerstörung des Umschlingungsgliedes und/oder der Kegelscheiben.

Stufenlos einstellbare Kraftfahrzeug-Getriebe mit Schlupfregelung sind beispielsweise aus US-A-2001/002 316, DE-C-195 05 561, DE-A-43 12 745, EP-A-0 451 887, EP-B-0 705 399, WO-A-92/18791, US-A-5 182 968 und US-A-5 310 384 bekannt. Für die Schlupfregelung ist zunächst einmal die Detektion von Schlupf erforderlich. Dazu wird im Stand der Technik das Verhältnis der Drehzahlen der beiden Kegelscheibenpaare ermittelt. Anhand des Abstandes der Kegelscheiben zumindest eines Paares kann darüber hinaus die geometrische Lage des Umschlingungsgliedes ermittelt werden. Das Drehzahlübersetzungsverhältnis darf sich um ein bestimmtes Maß von dem sich aus der geometrischen Lage des Umschlingungsgliedes ergebenden geometrischen Übersetzungsverhältnis unterscheiden, damit die Anlage des Umschlingungsgliedes an den Kegelscheibenpaare noch als im wesentlichen schlupffrei angesehen werden kann. Sollte diese Obergrenze überschritten werden, so wird der Anpressdruck des mindestens einen diesbezüglich einstellbaren Kegelscheibenpaares erhöht. Das andere Kegelscheibenpaar weist im wesentlichen eine Vorspannung auf, die dem Anpressdruck des für die Anpressdruckregelung führenden Kegelscheibenpaares entspricht und derart eingestellt wird, dass Schlupf nicht auftreten kann.

In der Praxis hat sich herausgestellt, dass die bekannten Schlupfregelsysteme insbesondere bei plötzlichen Lastwechseln sowohl antriebs- als auch abtriebsseitig des Getriebes nicht schnell genug arbeiten, um einen übermäßig großen Schlupf verhindern zu können. Daher ist es üblich, bei den bekannten Kraftfahrzeug-Getrieben den Anpressdruck des für die Anpressdruckregelung zuständigen Kegelscheibenpaares an dem Umschlingungsglied ausreichend groß zu wählen, so dass auch bei plötzlichen Lastwechseln der Schlupf eine vorgegebene Obergrenze nicht übersteigt. Diese erhöhten Anpressdrücke reduzieren den Wirkungsgrad des Getriebes und führen damit bei Kraftfahrzeugen zu einem erhöhten Kraftstoffverbrauch, der den Vorteil der stufenlosen Übersetzung gegenüber Stufenautomaten wieder erheblich reduziert.

Der Erfindung liegt die Aufgabe zu Grunde, ein Verfahren zum Steuern eines stufenlosen Kraftfahrzeug-Getriebes zu schaffen, bei dem auch bei plötzlichen Lastwechseln der Schlupf eine vorgegebene Obergrenze nicht übersteigt, wobei der Wirkungsgrad des Getriebes erhöht wird.

Dieses Problem wird von einem Verfahren gemäß Anspruch 1 gelöst.

Zur Lösung dieser Aufgabe wird mit der Erfindung ein Verfahren zum Steuern eines stufenlosen Kraftfahrzeug-Getriebes der eingangs genannten Art vorgeschlagen, wobei
- die aktuellen Rotationsgeschwindigkeiten beider Kegelscheibenpaare erfasst werden,
- aus den Rotationsgeschwindigkeiten das aktuelle Übersetzungsverhältnis des Getriebes ermittelt wird,
- durch Einstellen des Anpressdrucks des mindestens einen Kegelscheibenpaares an dem Umschlingungsglied der aktuelle Reibschluss zwischen beiden derart gewählt wird, dass zur im wesentlichen schlupffreien Anlage des Umschlingungsgliedes an dem mindestens einen Kegelscheibenpaar der Schlupf eine vorgebbare Obergrenze nicht übersteigt,
- anhand zumindest des aktuellen Anpressdrucks und des Reibwerts zwischen dem Umschlingungsglied und dem mindestens einen Kegelscheibenpaar die aktuelle Reibschlusskapazität abgeschätzt wird,
- eine Drehmomentveränderung für die Eingangswelle des Getriebes erfasst wird,
- aus dieser Drehmomentveränderung anhand des aktuellen Übersetzungsverhältnisses die aktuelle Drehmomentveränderung des mindestens einen Kegelscheibenpaares ermittelt wird,
- der Anpressdruck des mindestens einen Kegelscheibenpaares erhöht wird, wenn der bei der aktuellen Drehmomentveränderung des mindestens einen Kegelscheibenpaares zur im wesentlichen schlupffreien Anlage des Umschlingungsgliedes an dem mindestens einen Kegelscheibenpaar abgeschätzte, erforderliche Reibschluss die aktuelle Reibschlusskapazität übersteigt und abgesenkt wird, wenn der erforderliche Reibschluss die aktuelle Reibschlusskapazität unterschreitet.

Bei dem erfindungsgemäßen Verfahren werden, wie an sich für die Schlupfregelung üblich, die aktuellen Rotationsgeschwindigkeiten beider Kegelscheibenpaare erfasst. Aus diesen Rotationsgeschwindigkeiten wird dann das aktuelle Übersetzungsverhältnis des Getriebes ermittelt. Durch Einstellen des Anpressdrucks des mindestens einen Kegelscheibenpaares wird der aktuelle Reibschluss zwischen diesem Kegelscheibenpaar und dem Umschlingungsglied so gewählt, dass eine im wesentlichen schlupffreie Anlage des Umschlingungsgliedes an dem Kegelscheibenpaar gewährleistet ist. Parallel dazu wird unter anderem anhand des Reibwerts zwischen Umschlingungsglied und dem mindestens einen Kegelscheibenpaar die aktuell gegebene Reibschlusskapazität abgeschätzt. In den Reibwert gehen Parameter wie die (Getriebeöl/Motorkühlwasser-)Temperatur, die Materialien und der Verschleiß ein. Ein entsprechend hoher Anpressdruck ist grundsätzlich zur Vermeidung von Schlupf wünschenswert, erhöht jedoch den Energieverbrauch und reduziert damit den Wirkungsgrad bezüglich der Drehmomentübertragung zwischen Eingangs- und Ausgangswelle des Getriebes und führt bei zu hohen Werten zu erhöhtem Verschleiß oder Beschädigung des Variators (Kegelscheiben/Umschlingungsmittel).

Zur Erhöhung des Wirkungsgrades des Getriebes wird daher bei dem erfindungsgemäßen Verfahren der Anpressdruck minimal gewählt, so dass unter den aktuellen Betriebsbedingungen des Getriebes der Schlupf die vorgegebene Obergrenze noch nicht übersteigt.

Damit weist das erfindungsgemäß angesteuerte Kraftfahrzeug-Getriebe eine recht geringe Reibschlusskapazität, d.h. eine recht geringe Reibschlussreserve auf. Dies ist im Hinblick auf eine Verbesserung des Wirkungsgrades und eine damit verbundene Reduktion des Kraftstoffverbrauchs vorteilhaft; im Falle eines plötzlichen Lastwechsels kann der Vorhalt an Anpressdruck unter Umständen nicht ausreichend sein, um zu verhindern, dass der Schlupf die vorgegebene Obergrenze übersteigt.

Daher wird erfindungsgemäß eine sich auf eine Drehmomentveränderung an der Eingangswelle des Getriebes auswirkende Zustandsänderung erfasst. Bei einem Kraftfahrzeug könnte dies beispielsweise die Veränderung der Drosselklappenstellung sein. Aus der sich auf die Eingangswelle des Getriebes auswirkenden Drehmomentveränderung wird dann anhand des aktuellen Übersetzungsverhältnisses die daraus resultierende Drehmomentveränderung des mindestens einen bezüglich des Anpressdrucks einstellbaren Kegelscheibenpaares ermittelt.

Sollte der Reibschluss, der erforderlich ist, um unter Berücksichtigung der aktuellen Drehmomentveränderung des mindestens einen Kegelscheibenpaares die im wesentlichen schlupffreie Anlage des Umschlingungsgliedes an diesem Kegelscheibenpaar zu gewährleisten, die aktuelle Reibschlusskapazität übersteigen, so wird der Anpressdruck der Kegelscheiben des mindestens einen Kegelscheibenpaares an dem Umschlingungsglied erhöht. Mit anderen Worten wird also erfindungsgemäß der Anpressdruck dann, wenn auf Grund einer Drehmomentveränderung an der Eingangs- oder der Ausgangswelle des Getriebes zu erwarten ist, erhöht.

Umgekehrt ist es selbstverständlich auch sinnvoll, den Anpressdruck dann zu verringern, wenn auf Grund der momentanen Betriebsbedingungen des Getriebes die aktuelle Reibschlusskapazität für den zur Sicherstellung der im wesentlichen schlupffreien Anlage des Umschlingungsgliedes erforderlichen Reibschluss um ein bestimmtes Maß übersteigt.

Der Anpressdruck des mindestens einen Kegelscheibenpaares wird also stets den jeweiligen Betriebszuständen des Getriebes entsprechend verändert, damit das Umschlingungsglied bei Sicherstellung der im wesentlichen schlupffreien Anlage dem minimal möglichen Anpressdruck (unter Aufrechterhaltung eines einstellbaren Sicherheitsbereichs) ausgesetzt ist. Dabei ist es sinnvoll, die Reduzierung des Anpressdruckes dann, wenn dies möglich ist, mit einer zeitlichen Verzögerung durchzuführen, so dass die diesbezüglichen Anpressdruckveränderungen niederfrequenter als die Lastwechsel an den Eingangsund Ausgangswellen des Getriebes sind.

Für den Aufbau bzw. die Erhöhung des Anpressdrucks wird eine systembedingte Mindestzeit benötigt. Sollte der Lastwechsel an der Eingangswelle des Getriebes so schnell erfolgen, dass die Anpressdruckerhöhung rechtzeitig nicht nachgeführt werden kann, so ist es zweckmäßig, die Auswirkung der Drehmomentveränderung auf die Eingangswelle des Getriebes zeitlich zu verzögern, und zwar so lange, bis der Anpressdruck auf denjenigen Wert eingestellt ist, der zur Erzeugung des abgeschätzten, erforderlichen Reibschlusses benötigt wird. Diese zeitliche Verzögerung kann beispielsweise durch Steuerung einer mit der Eingangswelle gekoppelten Kupplung und/oder durch zeitlich verzögerte Weitergabe des Fahrerwunsches an eines die Drehmomentveränderung bewirkenden Stellgliedes erfolgen. So wäre es beispielsweise möglich, den Drehmomentaufbau zeitlich zu verzögern und vom Betrag her durch Eingriff in die Motorsteuerung (Gemischbildung, Zündung) zu beeinflussen. Bei einer der weiteren oben angesprochenen Möglichkeit der Verzögerung handelt es sich um die zur Regelung des Schlupfes steuerbare eingangsseitig des Getriebes vorzusehende Kupplung, wie dies in EP-A-1 058 019 beschrieben ist. Die weitere Möglichkeit wäre eine permanente Verzögerung der Weitergabe des Fahrerwunsches (Gaspedal) an die Motorsteuerung.

Wie bereits oben angedeutet, ist es von Vorteil, durch Wahl des Anpressdrucks den für die im wesentlichen schlupffreie Anlage des Umschlingungsgliedes erforderlichen Reibschluss auch dann zu erhöhen, wenn sich das auf die Ausgangswelle des Getriebes auswirkende Drehmoment verändert. Dies ist beispielsweise dann der Fall, wenn ein Fahrzeug mit den angetriebenen Rädern einen Bordstein herunterfährt oder auf Grund anderer Umstände auf die angetriebenen Räder ein erhöhtes Drehmoment wirkt.

Je größer das auf die Ausgangswelle des Getriebes wirkende Drehmoment ist, desto größer ist die Gefahr, dass das Umschlingungsglied bei Lastwechseln schlüpft. Damit ist es zweckmäßig, bei größeren Drehmomenten die Reibschlusskapazität zu erhöhen, was beispielsweise durch Erhöhung des Anpressdruckvorhalts möglich ist.

Wie oben bereits zuvor erwähnt, muss die Geometrie des Umschlingungsgliedes ermittelt werden, um den Schlupf regeln zu können. Zweckmäßig ist es dabei, wenn die aktuelle Lage des Umschlingungsgliedes relativ zu den beiden Kegelscheibenpaaren erfasst wird, was wiederum dadurch ermittelt werden kann, dass die Relativpositionen der Kegelscheiben eines Paares ermittelt werden. Aus der aktuellen Lage des Umschlingungsgliedes wird dann das geometrische Übersetzungsverhältnis des Getriebes ermittelt.

Die Erfindung wird nachfolgend anhand eines bevorzugten Ausführungsbeispiels unter Bezugnahme auf die Zeichnung näher erläutert. Im einzelnen zeigen dabei:
- Fig. 1: schematisch die für die Erfindung wesentlichen Komponenten eines stufenlos einstellbaren Kraftfahrzeug-Getriebes mit als Blockschaltbild dargestellter Ansteuerung und
- Fig. 2: ein Diagramm, in dem für unterschiedliche Anpressdrücke der Schlupf über dem Drehmoment an der Ausgangswelle des Getriebes dargestellt ist.

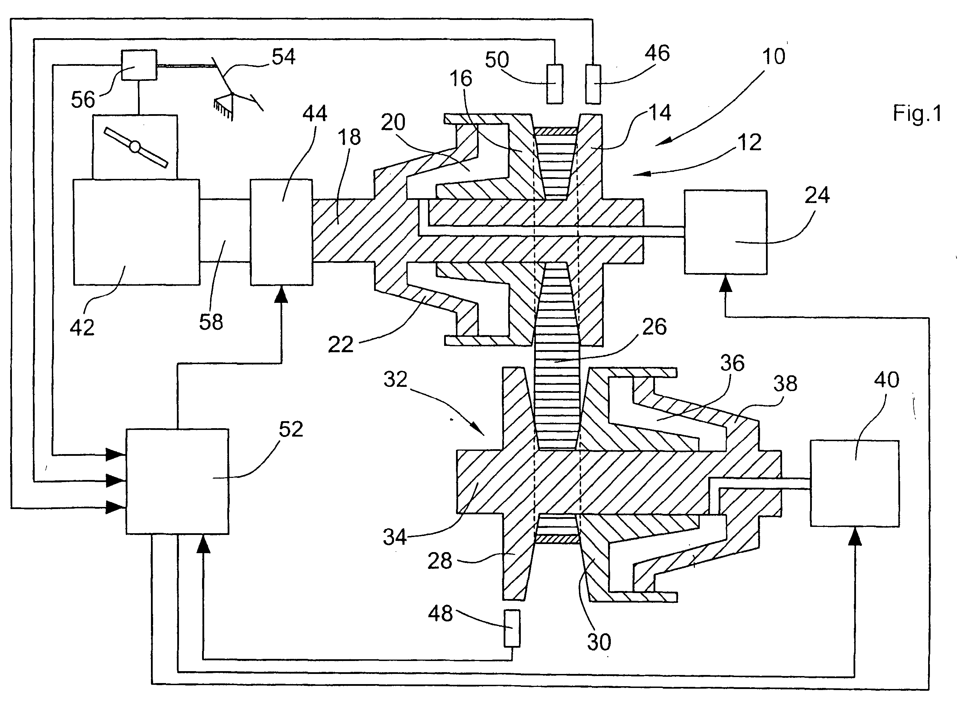

In Fig. 1 sind die Hauptkomponenten eines stufenlos einstellbaren Kraftfahrzeug-Getriebes 10 dargestellt. Dabei handelt es sich um ein erstes Kegelscheibenpaar 12, das zwei Kegelscheiben 14,16 aufweist, die drehfest mit der Eingangswelle 18 des Getriebes 10 verbunden sind. Der Abstand beider Kegelscheiben 14,16 ist einstellbar, indem eine Hydraulikflüssigkeit in den Raum 20 zwischen der zweiten Kegelscheibe 16 und einem ebenfalls auf der Eingangswelle 18 angeordneten Abschlusselement 22 eingebracht oder aus diesem entnommen wird. Der Druck der Hydraulikflüssigkeit wird über das Stellglied 24 eingestellt.

Zwischen den beiden Kegelscheiben 14 und 16 des ersten Kegelscheibenpaares 12 befindet sich ein Umschlingungsglied 26, bei dem es sich um ein Schuboder ein Zuggliederband handelt. Dieses Umschlingungsglied 26 erstreckt sich zwischen den beiden Kegelscheiben 28,30 eines zweiten Kegelscheibenpaares 32, die drehfest mit der Ausgangswelle 34 des Getriebes 10 verbunden sind. Die Kegelscheibe 30 des zweiten Kegelscheibenpaares 32 ist axial verschiebbar, indem eine Hydraulikflüssigkeit in den Raum 36 zwischen der Kegelscheibe 30 und einem mit der Ausgangswelle 34 verbundenen Abschlusselement 38 eingebracht oder aus diesem Raum 36 entnommen wird. Dies erfolgt über das Stellglied 40.

Während mit der Ausgangswelle 34 eine (nicht dargestellte) Abtriebseinheit (beispielsweise angetriebene Achse) des Kraftfahrzeuges verbunden ist, ist mit der Eingangswelle 18 ein Motor 42 als Antriebseinheit des Kraftfahrzeuges verbunden. Die Verbindung des Motors 42 mit der Eingangswelle 18 erfolgt über eine Kupplung 44, die in unten noch zu beschreibende Art und Weise angesteuert wird. Diese Kupplung 44 kann entweder eine Anfahrkupplung oder eine einem Drehmomentwandler (nicht dargestellt) nachgeschaltete Schaltkupplung sein (Vorwärtskupplung).

Das Übersetzungsverhältnis des Getriebes 10 ergibt sich durch die geometrische Lage des Umschlingungsgliedes 26. Dazu werden die verschiebbaren Kegelscheiben 16 und 30 der beiden Kegelscheibenpaare 12 und 32 gegensinnig axial verschoben.

Für die zuverlässige und störungsfreie Arbeitsweise eines stufenlos einstellbaren Getriebes ist es erforderlich, dass der Schlupf zwischen dem Umschlingungsglied 26 und den Kegelscheibenpaare 12,32 eine bestimmte Obergrenze nicht überschreitet. Dazu muss zunächst einmal erkannt werden, ob Schlupf vorliegt. Zu diesem Zweck werden mittels Sensoren 46,48 die Umdrehungsgeschwindigkeiten der beiden Kegelscheibenpaare 12,32 ermittelt. Ferner wird die Position bzw. Lage des Umschlingungsgliedes 26 mittels eines Sensors 50 ermittelt. Die Ausgangssignale dieser drei Sensoren 46 bis 50 werden einer Auswerte- und Ansteuerschaltung 52 zugeführt. Sollte das durch die Umdrehungsgeschwindigkeiten ermittelte Übersetzungsverhältnis von dem durch die Position vorgegebenen Übersetzungsverhältnis abweichen, liegt Schlupf vor, dem durch Ansteuerung beispielsweise des Stellgliedes 40 entgegengewirkt wird, so dass die Anpresskraft des zweiten Kegelscheibenpaares 32 am Umschlingungsglied 26 erhöht wird.

Eine zu hohe Anpresskraft wirkt sich nachteilig auf den Wirkungsgrad des Getriebes 10 aus. Insoweit ist es zweckmäßig, den Anpressdruck stets auf den Wert einzustellen, der ausreichend ist, damit der Schlupf kleiner als die Obergrenze ist. Dies allerdings ist insofern nachteilig, als nun für plötzliche Lastwechsel (Drehmomenterhöhung) an der Eingangswelle 18 des Getriebes 10 keine "Reserve" mehr gegen Schlupf des Umschlingungsmittels gegeben ist. Ein Lastwechsel an der Eingangswelle 18 würde dann automatisch zur Überschreitung der Schlupf-Obergrenze führen, was die Gefahr der Zerstörung des Getriebes 10 vor allem des Umschlingungsmittels mit sich bringt.

Bei dem hier zu beschreibenden Verfahren zur Ansteuerung eines stufenlos einstellbaren Getriebes wird daher untersucht, ob die auf Grund der Anpresskraft gegebene Reibschlusskapazität am in diesem Fall zweiten Kegelscheibenpaar 32 für eine bevorstehende Drehmomenterhöhung bzw. Drehmomentschwankung an der Eingangswelle 18 des Getriebes 10 ausreichend ist. Zu diesem Zweck wird der Fahrerwunsch, also die Stellung des Fahrpedals 54 an dem Drosselklappenstellglied 56 erfasst. Auf Grund des Fahrerwunsches und des momentanen Übersetzungsverhältnisses des Getriebes 10 wird dann ermittelt, ob die Reibschlusskapazität am zweiten Kegelscheibenpaar 32 ausreichend groß ist. Sollte dies nicht der Fall sein, so wird der Anpressdruck des zweiten Kegelscheibenpaares 32 am Umschlingungsglied 26 erhöht, bevor die Drehmomenterhöhung auf die Eingangswelle 18 weitergegeben wird. Die Druckerhöhung kann nur zeitlich verzögert erfolgen, weshalb bis zum Aufbau des erforderlichen Anpressdrucks über die Kupplung 44 die Drehmomenterhöhung des Motors 42 an die Eingangswelle 18 des Getriebes 10 reduziert weitergegeben wird. Hierzu wird die Kupplung 44 über die Auswerte- und Ansteuerschaltung 52 entsprechend angesteuert, indem der Schlupf der Kupplung 44 entsprechend eingestellt wird. Umgekehrt kann der Anpressdruck des zweiten Kegelscheibenpaares 32 reduziert werden, wenn das Drehmoment an der Eingangswelle 18 reduziert wird.

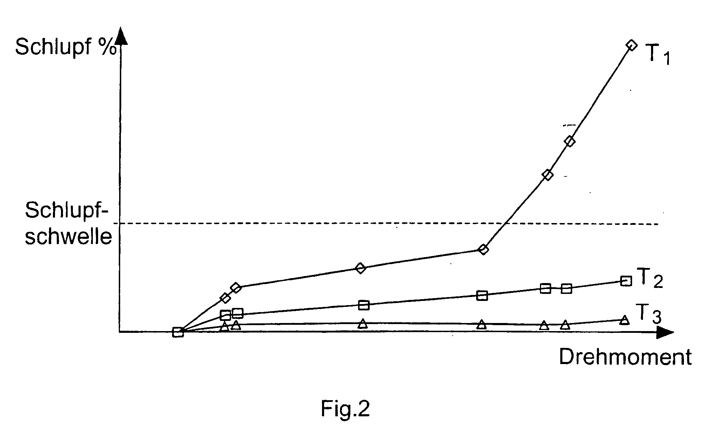

Im Rahmen von Versuchen hat sich herausgestellt, dass die Vorhaltung des Anpressdrucks des zweiten Kegelscheibenpaares 32, die sich letztendlich auf die Reibschlusskapazität des zweiten Kegelscheibenpaares 32 auswirkt, in Abhängigkeit von dem Drehmoment an der Ausgangswelle 34 des Getriebes 10 unterschiedlich sein muss, da nämlich die Gefahr des Schlüpfens des Umschlingungsgliedes 26 mit zunehmenden Ausgangswellen-Drehmoment (Eingangsmoment multipliziert mit Variatorübersetzung) steigt. Dieser Umstand konnte im Rahmen von empirischen Untersuchungen festgestellt werden und ist in Fig. 2 dargelegt. In dem Diagramm gemäß Fig. 2 ist auf der Ordinate der Schlupf in Prozent und auf der Abszisse das Drehmoment der Ausgangswelle 34 aufgetragen. Parametriert ist das Diagramm in Abhängigkeit von der Reibschlusskapazität T1 bis T3, wobei der Anpressdruck bei T1 geringer ist als bei T2 und der Anpressdruck bei T2 geringer ist als bei T3. Das Diagramm zeigt, dass bei höheren Drehmomenten die Gefahr des plötzlichen Auftretens von Schlupf steigt (zwischen T1, T2 und T3 bestehen unterschiedliche Sicherheitsfaktoren). Daher wird nach der Erfindung in Abhängigkeit von dem Ausgangsdrehmoment des Getriebes 10 der Anpressdruckvorhalt erhöht, um vermehrte Sicherheit gegen das plötzliche Auftreten eines über der Obergrenze liegenden Schlupfes zu gewährleisten.

Im Zusammenhang mit der obigen Beschreibung wurde bereits darauf hingewiesen, dass der Druckaufbau am zweiten Kegelscheibenpaar 32 nur zeitverzögert erfolgen kann. Dies gilt aber letztendlich auch für die Variation des Drehmoments am Eingang der Welle 18. Für die diesbezügliche Zeitverzögerung ist beispielsweise das Ansprechverhalten des Motors 42, also die Übertragungsfunktion zwischen dem Fahrpedal 54 und der Ausgangswelle 58 des Motors 42 verantwortlich. Diese Übertragungsfunktion ist in der Auswerte- und Steuerschaltung 52 abgelegt. In dieser Schaltung sind ferner das Motorkennlinienfeld und das Kennlinienfeld gemäß Fig. 2 sowie die weiter oben im Zusammenhang mit der Weitergabe des Fahrerwunsches beschriebenen Regelalgorithmen abgelegt.

Für die bereits erwähnte Reibschlusskapazität ist insbesondere der Reibwert zwischen dem Umschlingungsglied 26 und dem zweiten Kegelscheibenpaar 32 verantwortlich. Hier gehen der Verschleiß, die Temperatur und das Material (Stahl/Öl) ein. Darüber hinaus spielt als Hauptgröße selbstverständlich der Anpressdruck eine Rolle.

Nach den zuvor dargelegten Grundsätzen könnte man selbstverständlich auch den Anpressdruck am ersten Kegelscheibenpaar 12 steuern. Dieser Anpressdruck ist aber vorteilhafterweise durch die Kraft einer (nicht dargestellten) Vorspannfeder derart hoch eingestellt, dass Schlupf am ersten Kegelscheibenpaar 12 nicht auftreten kann.

## Patentansprüche

1. Verfahren zum Steuern eines stufenlosen Kraftfahrzeug-Getriebes, das eine mit einer Antriebseinheit (42) eines Kraftfahrzeuges verbindbare Eingangswelle (18) mit einem ersten Kegelscheibenpaar (12) und eine mit einer Abtriebseinheit des Kraftfahrzeuges verbindbare Ausgangswelle (34) mit einem zweiten Kegelscheibenpaar (32) und ein an den Kegelscheiben (14,16,28,30) beider Kegelscheibenpaare (12,32) im wesentlichen reibschlüssig anliegendes Umschlingungsglied (26) aufweist, wobei der Kegelscheibenanpressdruck mindestens des zweiten Kegelscheibenpaares (32), das das Umschlingungsglied (26) antreibt, variabel ist, wobei zur Vermeidung von Schlupf zwischen dem Umschlingungsglied (26) und dem zweiten Kegelscheibenpaar (32) wie folgt verfahren wird:
- die aktuellen Rotationsgeschwindigkeiten beider Kegelscheibenpaare (12,32) werden erfasst,
- aus den Rotationsgeschwindigkeiten wird das aktuelle Übersetzungsverhältnis des Getriebes (10) ermittelt,
- durch Einstellen des Anpressdrucks des zweiten Kegelscheibenpaares (32) an dem Umschlingungsglied (26) wird der aktuelle Reibschluss zwischen beiden derart gewählt, dass zur im wesentlichen schlupffreien Anlage des Umschlingungsgliedes (26) an dem zweiten Kegelscheibenpaar (32) der Schlupf eine vorgebbare Obergrenze nicht übersteigt,
- anhand zumindest des aktuellen Anpressdrucks und des Reibwerts zwischen dem Umschlingungsglied (26) und dem zweiten Kegelscheibenpaar (32) wird die aktuelle Reibschlusskapazität abgeschätzt,
- eine Drehmomentveränderung für die Eingangswelle (18) des Getriebes (10) wird erfasst,
- aus dieser Drehmomentveränderung wird die aktuelle Drehmomentveränderung des zweiten Kegelscheibenpaares (32) ermittelt,
- der Anpressdruck des zweiten Kegelscheibenpaares (32) wird erhöht, wenn der bei der aktuellen Drehmomentveränderung des zweiten Kegetscheibenpaares (32) zur im wesentlichen schlupffreien Anlage des Umschlingungsgliedes (26) an dem zweiten Kegelscheibenpaar (32) abgeschätzte, erforderliche Reibschluss die aktuelle Reibschlusskapazität übersteigt.

2. Verfahren nach Anspruch 1, **dadurch gekennzeichnet, dass** die Auswirkung der Drehmomentveränderung auf die Eingangswelle (18) des Getriebes (10) zeitlich verzögert wird, und zwar so lange, bis der Anpressdruck auf den zur Erzeugung des abgeschätzten, erforderlichen Reibschlusses benötigten Wert eingestellt ist.

3. Verfahren nach Anspruch 2, **dadurch gekennzeichnet, dass** die Verzögerung durch Steuerung einer mit der Eingangswelle (18) gekoppelten Kupplung (44) und/oder durch zeitlich verzögerte Weitergabe eines die Drehmomentveränderung bewirkenden Stellsignals erfolgt.

4. Verfahren nach einem der Ansprüche 1 bis 3, **dadurch gekennzeichnet, dass** in Abhängigkeit von dem Drehmoment an der Ausgangswelle (34) des Getriebes die aktuelle Reibschlusskapazität durch Wahl des Anpressdrucks verändert wird.

5. Verfahren nach Anspruch 4, **dadurch gekennzeichnet, dass** der Vorhalt des Anpressdrucks zur Erhöhung der Reibschlusskapazität zu größeren Drehmomenten der Ausgangswelle (34) hin größer gewählt wird.

6. Verfahren nach einem der Ansprüche 1 bis 5, **dadurch gekennzeichnet, dass** die Drehmomentveränderung anhand eines die Drehmomentveränderung bewirkenden Stellgliedes der Antriebseinheit (42) des Kraftfahrzeuges und Übertragungsfunktionen erfolgt, die die Abhängigkeit des Drehmoments der Antriebseinheit (42) von dem Stellsignal angeben.

7. Verfahren nach einem der Ansprüche 1 bis 6, **dadurch gekennzeichnet, dass** die aktuelle Lage des Umschlingungsgliedes (26) relativ zu den beiden Kegelscheibenpaare (12,32) erfasst wird und aus dieser aktuellen Lage das geometrische Übersetzungsverhältnis des Getriebes (10) ermittelt wird.

## Claims

1. Method for controlling a continuously variable motor vehicle transmission which has an input shaft (18) connectable to a drive unit (42) of a motor vehicle and having a first pair of conical discs (12), an output shaft (34) connectable to a driven unit of the motor vehicle as well as a second pair of conical discs (32), and a wrap-around member (26) bearing essentially frictionally against the conical discs (14, 16, 28, 30) of the two pairs of conical discs (12, 32), the conical-disc pressure force of at least the second pair of conical discs (32), which drives the wrap-around member (26), being variable, the following procedure being adopted in order to avoid slip between the wrap-around member (26) and the second pair of conical discs (32):
- the current rotational speeds of the two pairs of conical discs (12, 32) are detected,
- the current transmission ratio of the transmission (10) is determined from the rotational speeds,
- by the setting of the pressure force of the second pair of conical discs (32) against the wrap-around member (26), the current frictional contact between the two is selected such that, for the essentially slip-free bearing of the wrap-around member (26) against the second pair of conical discs (32), the slip does not exceed a predeterminable upper limit,
- the current frictional contact capacity is estimated on the basis of at least the current pressure force and of the coefficient of friction between the wrap-around member (26) and the second pair of conical discs (32),
- a torque variation for the input shaft (18) of the transmission (10) is detected,
- the current torque variation of the second pair of conical discs (32) is determined from this torque variation,
- the pressure force of the second pair of conical discs (32) is increased when the necessary frictional contact, estimated between the current torque variation of the second pair of conical discs (32) for the essentially slip-free bearing of the wrap-around member (26) against the second pair of conical discs (32), exceeds the current frictional contact capacity.

2. Method according to Claim 1, **characterized in that** the effect of the torque variation on the input shaft (18) of the transmission (10) is time-delayed, specifically until the pressure force is set to the value required for generating the estimated necessary frictional contact.

3. Method according to Claim 2, **characterized in that** the delay takes place by means of the control of a clutch (44) coupled to the input shaft (18) and/or by means of the time-delayed transfer of an actuating signal causing the torque variation.

4. Method according to one of Claims 1 to 3, **characterized in that** the current frictional contact capacity is varied as a function of the torque at the output shaft (34) of the transmission by a selection of the pressure force.

5. Method according to Claim 4, **characterized in that**, to increase the frictional contact capacity, the correction selected for the pressure force is greater towards higher torques of the output shaft (34).

6. Method according to one of Claims 1 to 5, **characterized in that** the torque variation takes place by means of an actuator of the drive unit (42) of the motor vehicle, the said actuator causing the torque variation, and by means of transmission functions which indicate the dependence of the torque of the drive unit (42) on the actuating signal.

7. Method according to one of Claims 1 to 6, **characterized in that** the current position of the wrap-around member (26) in relation to the two pairs of conical discs (12, 32) is detected and the geometric transmission ratio of the transmission (10) is determined from this current position.

## Revendications

1. Procédé de commande d'une transmission directe d'un véhicule automobile, comportant un arbre d'entrée (18) pouvant être relié à une unité d'entraînement (42) d'un véhicule automobile, avec une première paire de disques coniques (12) et un arbre de sortie (34) pouvant être relié à une unité de sortie du véhicule automobile, avec une seconde paire de disques coniques (32) et un organe d'enroulement (26) sensiblement adjacent par friction aux disques coniques (14, 16, 28, 30) des deux paires de disques coniques (12, 32), la pression d'appui des disques coniques au moins de la « seconde » paire de disques coniques (32), qui entraîne l'organe d'enroulement (26) étant variable, le processus suivant étant appliqué pour éviter un glissement entre l'organe d'enroulement (26) et la « seconde » paire de disques coniques (32) :
- les vitesses de rotation actuelles des deux paires de disques coniques (12, 32) sont détectées,
- le rapport de transmission actuel de la transmission (10) est déterminé sur la base des vitesses de rotation,
- par réglage de la pression d'appui de la « seconde » paire de disques coniques (32) sur l'organe d'enroulement (26), l'entraînement actuel par friction entre les deux est choisi de façon à ce que le glissement ne dépasse pas une limite supérieure prédéfinissable pour une application sensiblement sans glissement de l'organe d'enroulement (26) sur la « seconde » paire de disques coniques (32),
- à l'aide d'au moins la pression d'appui actuelle et du coefficient de friction entre l'organe d'enroulement (26) et la « seconde » paire de disques coniques (32), la capacité actuelle d'entraînement par friction est estimée,
- une modification du couple de rotation de l'arbre d'entrée (18) de la transmission (10) est détectée,
- à partir de cette modification du couple de rotation, la modification actuelle du couple de rotation de la « seconde » paire de disques coniques (32) est déterminée,
- la pression d'appui de la « seconde » paire de disques coniques (32) augmente lorsque l'entraînement par friction estimé lors de la modification actuelle du couple de rotation de la « seconde » paire de disques coniques (32) et requis pour l'application sensiblement sans glissement de l'organe d'enroulement (26) sur la « seconde » paire de disques coniques (32) dépasse la capacité actuelle d'entraînement par friction.

2. Procédé selon la revendication 1, **caractérisé en ce que** l'action de la modification du couple de rotation sur l'arbre d'entrée (18) de la transmission (10) est momentanément temporisée et ceci jusqu'à ce que la pression d'appui soit réglée à la valeur nécessaire pour générer l'entraînement par friction nécessaire estimé.

3. Procédé selon la revendication 2, **caractérisé en ce que** la temporisation est réalisée par commande d'un embrayage (44) accouplé à l'arbre d'entrée (18) et/ou par une restitution momentanément temporisée d'un signal de réglage générant la modification du couple de rotation.

4. Procédé selon l'une quelconque des revendications 1 à 3, **caractérisé en ce qu'**en fonction du couple de rotation à l'arbre de sortie (34) de la transmission, la capacité d'entraînement par friction actuelle est modifiée par sélection de la pression d'appui.

5. Procédé selon la revendication 4, **caractérisé en ce que**, pour augmenter la capacité d'entraînement par friction, pour des couples de rotation plus élevés à l'arbre de sortie (34), l'action dérivée de la pression d'appui est sélectionnée à une valeur plus importante.

6. Procédé selon l'une quelconque des revendications 1 à 5, **caractérisé en ce que** la modification du couple de rotation a lieu par l'intermédiaire d'un organe de réglage de l'unité d'entraînement (42) du véhicule automobile générant la modification du couple de rotation et de fonctions de transmission qui indiquent la dépendance du couple de rotation de l'unité d'entraînement (42) par rapport au signal de réglage.

7. Procédé selon l'une quelconque des revendications 1 à 6, **caractérisé en ce que** la position actuelle de l'organe d'enroulement (26) est détectée relativement aux deux paires de disques coniques (12, 32) et **en ce que** le rapport de transmission géométrique de la transmission (10) est déterminé à partir de cette position actuelle.
